# EUROPEAN PATENT APPLICATION

(11) **EP 4 369 754 A1**
(43) Date of publication of application: **15.05.2024**
(21) Application number: 22851970.8
(22) Date of filing: 26.07.2022
(51) Int. Cl.: H04W 8/18, H04W 12/60

(54) **METHOD FOR UPDATING SECURITY CONTEXT AND COMMUNICATION DEVICE**

(30) Priority: 02.08.2021 CN 202110882942
(71) Applicant: Huawei Technologies Co., Ltd., Longgang Shenzhen, Guangdong 518129 (CN)
(72) Inventor: YANG, Linping, Shenzhen, Guangdong 518129 (CN); DENG, Juan, Shenzhen, Guangdong 518129 (CN); HU, Wen, Shenzhen, Guangdong 518129 (CN); HU, Xiange, Shenzhen, Guangdong 518129 (CN); WEN, Xiao, Shenzhen, Guangdong 518129 (CN); QIANG, Li, Shenzhen, Guangdong 518129 (CN); SHU, Lin, Shenzhen, Guangdong 518129 (CN)
(74) Representative: Isarpatent
(86) International application number: PCT/CN2022/107949
(87) International publication number: WO 2023/011256

(57) **Abstract**

A security context update method and a communication apparatus are provided. The method is performed by a terminal, and includes: storing a security context of first access and a security context of second access when the first access of the terminal and the second access of the terminal enter a deregistered state. The first access is one of 3GPP access and non-3GPP access, the second access is the other of the 3GPP access and the non-3GPP access, and the first access and the second access are different. According to the method, when the terminal supports multiple records for multiple registration, storage occasions of NAS security contexts corresponding to the 3GPP access and the non-3GPP access are provided.

## Description

This application claims priority to Chinese Patent Application No. 202110882942.7, filed with the China National Intellectual Property Administration on August 2, 2021 and entitled "SECURITY CONTEXT UPDATE METHOD AND COMMUNICATION APPARATUS", which is incorporated herein by reference in its entirety.

### TECHNICAL FIELD

This application relates to the communication field, and more specifically, to a security context update method and a communication apparatus.

### BACKGROUND

Currently, when user equipment (User Equipment, UE) is connected to a wireless communication network, a 5th generation (5th generation, 5G) network needs to negotiate with a network-side server, for example, an access and mobility management function (access and mobility management function, AMF). To maintain message integrity and security during negotiation, a security context is usually stored in a universal subscriber identity module (universal subscriber identity module, USIM) or a non-volatile memory (non-volatile memory) of the UE.

In an existing standard, the USIM supports multiple records of non-access stratum (Non-Access-Stratum, NAS) security context storage for multiple registration, that is, a USIM file includes two files: EF_{5GS3GPPNSC} and EF_{5GSN3GPPNSC}, and each file is expanded from one record (record) of security context storage to two records of security context storage.

However, in the existing standard, storage, reading, and use of the security context after the EF_{5GS3GPPNSC} and EF_{5GSN3GPPNSC} files are separately expanded to two records are not specifically specified.

### SUMMARY

This application provides a security context update method and a communication apparatus. According to the method, when a terminal supports multiple records for multiple registration, storage occasions of NAS security contexts corresponding to 3GPP access and non-3GPP access are provided.

According to a first aspect, a security context update method is provided. The security context update method may be performed by a terminal, or may be performed by a chip or a circuit disposed in a terminal. This is not limited in this application. For ease of description, the following uses an example in which the method is performed by a terminal for description.

The method includes: storing a security context of first access and a security context of second access when the first access of the terminal and the second access of the terminal enter a deregistered state. The first access is that the terminal accesses a network by using a 3rd generation partnership project 3GPP access network, and the second access is that the terminal accesses a network by using a non-3GPP access network; or the first access is that the terminal accesses a network by using a non-3GPP access network, and the second access is that the terminal accesses a network by using a 3GPP access network.

With reference to the first aspect, in some implementations of the first aspect, the deregistered state includes power-off.

With reference to the first aspect, in some implementations of the first aspect, the storing a security context of first access and a security context of second access includes: storing the security context of the first access and the security context of the second access in a storage unit. The storage unit is a universal subscriber identity module USIM or a non-volatile memory.

With reference to the first aspect, in some implementations of the first aspect, a first file of the terminal is used to store the security context of the first access, a second file of the terminal is used to store the security context of the second access, the first file includes a first record and a second record, and the second file includes a third record and a fourth record.

With reference to the first aspect, in some implementations of the first aspect, a first security context in the first record corresponds to a first public land mobile network PLMN, a fourth security context in the fourth record corresponds to the first PLMN, and the first access has been registered with the first PLMN.

With reference to the first aspect, in some implementations of the first aspect, a second security context in the second record corresponds to a second PLMN, a third security context in the third record corresponds to the second PLMN, and the second access has been registered with the second PLMN.

With reference to the first aspect, in some implementations of the first aspect, the storing a security context of first access and a security context of second access includes: storing the first security context in the first record, and storing the fourth security context in the fourth record. The first PLMN is a PLMN with which the first access is registered and is successfully registered last time before the first access enters the deregistered state.

With reference to the first aspect, in some implementations of the first aspect, when last registration of the first access before the first access enters the deregistered state fails, and a security context in which the first access is most recently successfully registered exists, the first security context is stored in the first record, and the fourth security context is stored in the fourth record based on the security context in which the first access is most recently successfully registered. The first PLMN is a PLMN with which the first access is most recently successfully registered.

With reference to the first aspect, in some implementations of the first aspect, the storing a security context of first access and a security context of second access includes: when last registration of the first access before the first access enters the deregistered state fails, and a security context in which the first access is most recently successfully registered does not exist, setting the security context in the first record and the security context in the fourth record to be invalid.

With reference to the first aspect, in some implementations of the first aspect, the storing a security context of first access and a security context of second access includes: storing the second security context in the second record, and storing the third security context in the third record. The second PLMN is a PLMN with which the second access is registered and is successfully registered last time before the second access enters the deregistered state.

Optionally, the first PLMN may be the same as or different from the second PLMN.

With reference to the first aspect, in some implementations of the first aspect, the storing a security context of first access and a security context of second access includes: when last registration of the second access before the second access enters the deregistered state fails, and a security context in which the second access is most recently successfully registered exists, storing the second security context in the second record, and storing the third security context in the third record based on the security context in which the second access is most recently successfully registered. The second PLMN is a PLMN with which the second access is most recently successfully registered.

With reference to the first aspect, in some implementations of the first aspect, the storing a security context of first access and a security context of second access includes: when last registration of the second access before the second access enters the deregistered state fails, and a security context in which the second access is most recently successfully registered does not exist, setting the security context in the second record and the security context in the third record to be invalid.

With reference to the first aspect, in some implementations of the first aspect, the storing a security context of first access and a security context of second access includes: when last registration of the first access before the first access enters the deregistered state fails, and a security context in which the first access is most recently successfully registered does not exist, and when last registration of the second access before the second access enters the deregistered state fails, and a security context in which the second access is most recently successfully registered does not exist, keeping the security context in the second record and the security context in the third record unchanged.

With reference to the first aspect, in some implementations of the first aspect, the first PLMN is the same as the second PLMN, and the storing a security context of first access and a security context of second access includes:
storing the first security context in the first record, storing the third security context in the third record, and setting the security context in the second record and the security context in the fourth record to be invalid. The first PLMN is a PLMN with which the first access is registered and is successfully registered last time before the first access enters the deregistered state, and the second PLMN is a PLMN with which the second access is registered and is successfully registered last time before the second access enters the deregistered state.

According to a second aspect, a security context update method is provided. The security context update method may be performed by a terminal, or may be performed by a chip or a circuit disposed in a terminal. This is not limited in this application. For ease of description, the following uses an example in which the method is performed by a terminal for description.

The method includes: when first access of the terminal enters a deregistered state, storing a security context of the first access; or when second access of the terminal enters a deregistered state, storing a security context of the second access. The first access is that the terminal accesses a network by using a 3rd generation partnership project 3GPP access network, and the second access is that the terminal accesses a network by using a non-3GPP access network; or the first access is that the terminal accesses a network by using a non-3GPP access network, and the second access is that the terminal accesses a network by using a 3GPP access network.

With reference to the second aspect, in some implementations of the second aspect, when the first access is in the deregistered state, and a current security context of the second access changes, the security context of the first access is stored based on the current security context of the second access.

The foregoing solution may be understood as follows: When the first access is in the deregistered state or a null state, refresh of the stored security context of the first access is triggered by change of the current context of the second access.

With reference to the second aspect, in some implementations of the second aspect, when the current security context of the second access changes, and the second access enters the deregistered state again, the security context of the second access is stored based on the current security context of the second access.

With reference to the second aspect, in some implementations of the second aspect, that the current security context of the second access changes includes generation, update, or deletion of the current security context of the second access.

With reference to the second aspect, in some implementations of the second aspect, the update does not include update of a non-access stratum NAS uplink/downlink count.

With reference to the second aspect, in some implementations of the second aspect, the deregistered state includes power-off.

With reference to the second aspect, in some implementations of the second aspect, the storing a security context of the first access includes: storing the security context of the first access in a storage unit; the storing a security context of the second access includes: storing the security context of the second access in the storage unit; and the storage unit is a universal subscriber identity module USIM or a non-volatile memory.

With reference to the second aspect, in some implementations of the second aspect, a first file of the terminal is used to store the security context of the first access, a second file of the terminal is used to store the security context of the second access, the first file includes a first record and a second record, and the second file includes a third record and a fourth record.

With reference to the second aspect, in some implementations of the second aspect, a first security context in the first record corresponds to a first public land mobile network PLMN, a fourth security context in the fourth record corresponds to the first PLMN, and the first access has been registered with the first PLMN.

With reference to the second aspect, in some implementations of the second aspect, a second security context in the second record corresponds to a second PLMN, a third security context in the third record corresponds to the second PLMN, and the second access has been registered with the second PLMN.

With reference to the second aspect, in some implementations of the second aspect, when the first access enters the deregistered state, the storing a security context of the first access includes: when last registration of the first access before the first access enters the deregistered state fails, and a security context in which the first access is most recently successfully registered does not exist, setting the security context in the first record to be invalid, and storing the second security context in the second record. The second PLMN is a PLMN currently accessed by the second access.

With reference to the second aspect, in some implementations of the second aspect, when last registration of the first access before the first access enters the deregistered state fails, and a security context in which the first access is most recently successfully registered exists, the first security context is stored in the first record, and the second security context is stored in the second record based on the security context in which the first access is most recently successfully registered. The first PLMN is a PLMN with which the first access is most recently successfully registered, and the second PLMN is a PLMN currently accessed by the second access.

With reference to the second aspect, in some implementations of the second aspect, when the first access enters the deregistered state, the storing a security context of the first access includes: storing the first security context in the first record, and storing the second security context in the second record. The first PLMN is a PLMN with which the first access is registered and is successfully registered last time before the first access enters the deregistered state, and the second PLMN is a PLMN currently accessed by the second access.

With reference to the second aspect, in some implementations of the second aspect, when the first access is in the deregistered state, and the current security context of the second access changes, the storing the security context of the first access based on the current security context of the second access includes: when the first access is in the deregistered state, and the current security context of the second access changes, storing the first security context in the first record, and storing a fifth security context in the second record. The fifth security context corresponds to the current security context of the second access.

It should be understood that the current security context of the second access in the correspondence between the fifth security context and the current security context of the second access is a changed security context.

With reference to the second aspect, in some implementations of the second aspect, when the current security context of the second access changes, and the second access enters the deregistered state again, the storing the security context of the second access based on the current security context of the second access includes: when the current security context of the second access changes, and the second access enters the deregistered state again, storing a sixth security context in the third record, where the sixth security context corresponds to the current security context of the second access; and storing the fourth security context in the fourth record.

With reference to the second aspect, in some implementations of the second aspect, the first PLMN is the same as the second PLMN, and when the first access enters the deregistered state, the storing a security context of the first access includes: storing the security context of the first access of the first PLMN in the first record, and setting the security context in the second record to be invalid. The first PLMN is a PLMN with which the first access is registered and is successfully registered last time before the first access enters the deregistered state, and the second PLMN is a PLMN currently accessed by the second access.

With reference to the second aspect, in some implementations of the second aspect, when the current security context of the second access changes, and the first access is in the deregistered state, the storing the security context of the first access includes: storing the first security context in the first record, and setting the security context in the second record to be invalid.

With reference to the first aspect or the second aspect, in some implementations of the first aspect or the second aspect, when the first access enters a first state from the deregistered state (or is expressed as when the first access leaves the deregistered state), and the second access is in the deregistered state or the null state, the UE reads the security context of the first access and the security context of the second access from the storage unit, and identifies the security context of the first access and the security context of the second access stored in the storage unit as invalid. The first state is a state other than the deregistered state and the null state. Otherwise, a local security context (a security context in a memory) of the UE is directly used, and no read operation is performed.

With reference to the first aspect or the second aspect, in some implementations of the first aspect or the second aspect, when the first access enters the first state from the deregistered state, (or expressed as when the first access leaves the deregistered state), the terminal reads the security context of the first access from the storage unit, and identifies the security context of the first access stored in the storage unit as invalid.

With reference to the first aspect or the second aspect, in some implementations of the first aspect or the second aspect, it is determined, based on a last visited registered tracking area identity LVR TAI of third access, whether the third access is successfully registered with a third PLMN. The third access is the first access or the second access, and the third PLMN corresponds to the LVR TAI.

With reference to the first aspect or the second aspect, in some implementations of the first aspect or the second aspect, the first state includes power-on.

With reference to the first aspect or the second aspect, in some implementations of the first aspect or the second aspect, the terminal determines whether an identifier of a PLMN on which the first access camps is the same as an identifier of a PLMN included in the second record in the first file. If the identifier of the PLMN on which the first access camps is the same as the identifier of the PLMN included in the second record in the first file, before sending a first registration request to the camped PLMN, the terminal sets the security context in the second record in the first file to a current security context of the first access. The first registration request includes a GUTI of the second access and/or an LVR TAI of the second access. If the identifier of the PLMN on which the first access camps is different from the identifier of the PLMN included in the second record in the first file, before sending a second registration request to the camped PLMN, the terminal sets the security context in the first record in the first file to the current security context of the first access. The second registration request includes a GUTI of the first access and an LVR TAI of the first access.

With reference to the first aspect or the second aspect, in some implementations of the first aspect or the second aspect, the UE determines whether an identifier of a PLMN on which the first access camps is the same as an identifier of a PLMN included in the first record in the first file. If the identifier of the PLMN on which the first access camps is the same as the identifier of the PLMN included in the first record in the first file, before sending a third registration request to the camped PLMN, the UE sets the security context in the first record in the first file to a current security context of the first access. The third registration request includes a GUTI of the first access and an LVR TAI of the first access. If the identifier of the PLMN on which the first access camps is different from the identifier of the PLMN included in the first record in the first file, the terminal determines again whether the identifier of the PLMN on which the first access camps is the same as an identifier of a PLMN included in the second record in the first file. If the identifier of the PLMN on which the first access camps is the same as the identifier of the PLMN included in the second record in the first file, before sending a fourth registration request to the camped PLMN, the UE sets the security context in the second record in the first file to the current security context of the first access. The fourth registration request includes a GUTI of the second access and/or an LVR TAI of the second access. If the identifier of the PLMN on which the first access camps is different from the identifier of the PLMN included in the second record in the first file, before sending a fifth registration request to the camped PLMN, the UE sets the security context in the first record in the first file to the current security context of the first access. The fifth registration request includes the GUTI of the first access and the LVR TAI of the first access.

According to a third aspect, this application provides a communication apparatus. The communication apparatus has a function of implementing the method according to any one of the first aspect or the possible implementations of the first aspect, or has a function of implementing the method according to any one of the second aspect or the possible implementations of the second aspect.

In an example, the communication apparatus may be a terminal.

In another example, the communication apparatus may be a component (for example, a chip or an integrated circuit) installed in the terminal.

According to a fourth aspect, a communication apparatus is provided, including at least one processor. The at least one processor is coupled to a memory, and may be configured to execute instructions in the memory, to implement the method according to any one of the first aspect and the possible implementations of the first aspect, or implement the method according to any one of the second aspect and the possible implementations of the second aspect. Optionally, the communication apparatus further includes the memory. Optionally, the communication apparatus further includes a communication interface, and the processor is coupled to the communication interface.

In an example, the communication apparatus may be a terminal.

In another example, the communication apparatus may be a component (for example, a chip or an integrated circuit) installed in the terminal.

According to a fifth aspect, a processor is provided, including an input circuit, an output circuit, and a processing circuit. The processing circuit is configured to receive a signal by using the input circuit, and transmit a signal by using the output circuit, so that the method according to any one of the first aspect or the possible implementations of the first aspect is implemented, or the method according to any one of the second aspect or the possible implementations of the second aspect is implemented.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, this application provides a computer-readable storage medium. The computer-readable storage medium stores computer instructions. When the computer instructions are run on a computer, the method according to any one of the first aspect or the possible implementations of the first aspect is performed, or the method according to any one of the second aspect or the possible implementations of the second aspect is performed.

According to a seventh aspect, this application provides a computer program product. The computer program product includes a computer program (which may also be referred to as code or instructions). When the computer program runs on a computer, the method according to any one of the first aspect or the possible implementations of the first aspect is performed, or the method according to any one of the second aspect or the possible implementations of the second aspect is performed.

According to an eighth aspect, this application provides a communication system, including the communication apparatus according to the fourth aspect.

### BRIEF DESCRIPTION OF DRAWINGS

FIG. 1 is a schematic diagram of a network architecture according to an embodiment of this application;
FIG. 2 is a schematic flowchart of a security context update method according to this application;
FIG. 3 is a schematic flowchart of a principle of using a read security context of first access according to this application;
FIG. 4 is a schematic flowchart of another principle of using a read security context of first access according to this application;
FIG. 5 is a schematic block diagram of a communication apparatus 1000 according to this application; and
FIG. 6 is a schematic diagram of a structure of a communication apparatus 10 according to this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system or a new radio (new radio, NR) system, a vehicle-to-everything (vehicle-to-X, V2X) system, a long term evolution-vehicle (long term evolution-vehicle, LTE-V) system, an internet of vehicles system, a machine type communication (machine type communication, MTC) system, an internet of things (internet of things, IoT) system, a long term evolution-machine (long term evolution-machine, LTE-M) system, a machine-to-machine (machine-to-machine, M2M) system, and the like, where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

The technical solutions provided in this application may be further applied to a future communication system, for example, a 6th generation mobile communication system. This is not limited in this application.

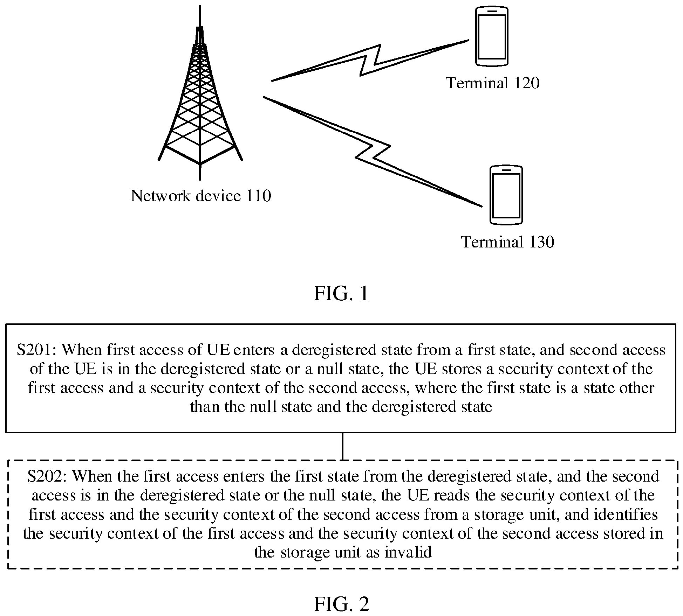

FIG. 1 is a schematic diagram of a network architecture according to an embodiment of this application. As shown in FIG. 1, a communication system in embodiments of this application may include a network device and a plurality of terminals. The network device may include one or more antennas. In addition, the network device may additionally include a transmitter chain and a receiver chain. A person of ordinary skill in the art may understand that the transmitter chain and the receiver chain each may include a plurality of components (such as a processor, a modulator, a multiplexer, a demodulator, a demultiplexer, or an antenna) related to signal sending and receiving.

The network device may communicate with the plurality of terminals. The terminal in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal may be a device that provides voice/data connectivity for a user, for example, a handheld device having a wireless connection function or a vehicle-mounted device. Currently, examples of some terminals are a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved public land mobile network (public land mobile network, PLMN), and/or any other suitable device configured to perform communication in a wireless communication system. This is not limited in embodiments of this application.

The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal in embodiments of this application may alternatively be a terminal in an internet of things system. IoT is an important part of future information technology development. A main technical feature of the IoT is to connect an object to a network by using a communication technology, to implement an intelligent network for human-machine interconnection and thing-thing interconnection.

In addition, in embodiments of this application, the terminal may further include a sensor, for example, an intelligent printer, a train detector, or a gas station. Main functions of the terminal include collecting data (for some terminals), receiving control information and downlink data from a network device, sending an electromagnetic wave, and transmitting uplink data to the network device.

The network device in embodiments of this application may be a device configured to communicate with a terminal. The network device may be an evolved NodeB (evolved NodeB, eNB, or eNodeB) in an LTE system, a radio controller in a cloud radio access network (cloud radio access network, CRAN) scenario, a radio network controller (radio network controller, RNC), a base station controller (base station controller, BSC), a home base station (for example, a home evolved NodeB or a home NodeB, HNB), or a baseband unit (baseband unit, BBU). Alternatively, the network device may be a relay station, an access point, a vehicle-mounted device, a wearable device, a network device in a 5G network, or a network device in a future evolved PLMN network, or may be an access point (access point, AP) in a wireless local area network (wireless local area network, WLAN), a wireless relay node, a wireless backhaul node, a transmission point (transmission point, TP), or a transmission reception point (transmission and reception point, TRP), or may be a gNB or a transmission point (TRP or TP) in a new radio (new radio, NR) system, one antenna panel or a group of antenna panels (including a plurality of antenna panels) of a base station in a 5G system, or a network node forming a gNB or a transmission point, for example, a baseband unit (BBU) or a distributed unit (distributed unit, DU). This is not limited in this embodiment of this application.

In some deployments, the gNB may include a central unit (central unit, CU) and a DU. The gNB may further include an active antenna unit (active antenna unit, AAU for short). The CU implements some functions of the gNB, and the DU implements some other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In addition, in embodiments of this application, the network device provides a cell with a service, and the terminal communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. The small cells are characterized by small coverage and a low transmit power, and are applicable to providing a high-rate data transmission service.

In addition, in embodiments of this application, the network device may include a base station (gNB), for example, a macro base station, a micro base station, an indoor hotspot, or a relay node, and has functions of: sending a radio wave to the terminal, to implement downlink data transmission and control uplink transmission by sending scheduling information, and receiving a radio wave sent by the terminal, to receive uplink data transmission.

To better understand embodiments of this application, the following first describes concepts in embodiments of this application.
1. Null (NULL) state: In this state, mobility management is not performed. In a 5G system, the null state may be understood as a 5G mobility management null state (5GMM-NULL state). In UE, a 5G service is disabled. In this state, a 5GS mobility management function is not performed.
2. Deregistered (DEREGISTERED) state: A context between the terminal and the network is not established, and the network does not know a location of the terminal, and the network cannot access the terminal. In the 5G system, the deregistered state may be understood as a 5G mobility management deregistered state (5GMM-DEREGISTERED state). In the 5GMM-DEREGISTERED state, a 5GMM context is not established, a network does not know a location of UE, and the network cannot access the UE. To establish the 5GMM context, the UE needs to initiate an initial registration procedure.
3. Non-volatile memory (non-volatile memory): Stored data does not disappear after power-off.
4. Native security context: The context is created after a network completes identity authentication of a terminal. In the 5G system, the native security context may be understood as a 5G NAS (non-access stratum) security context (native 5G NAS security context), which refers to a 5G security context, and a KAMF of the 5G security context is created by running primary identity authentication once in 5G.
5. Mapped security context: The context is obtained through deriving during interoperability. In the 5G system, the mapped security context may be understood as a mapped 5G NAS security context (mapped 5G NAS security context), which refers to a 5G security context, and a KAMF of the 5G security context is derived (derived) from an EPS key during interoperability.
6. Current security context: The context is a security context most recently used by a network. In the 5G system, the current security context may be understood as a current 5G NAS security context (current 5G NAS security context). A 5G NAS security context most recently used by the network is referred to as the current 5G NAS security context. A type of the current security context can be either a native security context or a mapped security context.
7. Non-current security context: The context is a non-current native security context. In the 5G system, the non-current security context may be understood as a 5G NAS security context (non-current 5G NAS security context), which is a non-current native 5G security context. The non-current 5G NAS security context is a full native (full native) type or a partial native (partial native) type.
   For content in the foregoing 4 to 7, refer to section 3.1 in the 3GPP standard TS 24.501.
8. A USIM supports multiple records of NAS security context storage functions for multiple registration. When a service n°122 in a USIM service table (service table) is available (that is, supports mobility management information of the 5G system), and a service n°136 in the USIM is available (that is, supports multiple records of NAS security context storage functions for multiple registration), the USIM supports multiple records of NAS security context storage functions for multiple registration. Otherwise, if the service n°122 or the service n°136 is unavailable, the USIM does not support multiple records of NAS security context storage functions for multiple registration.
9. Subscription permanent identifier (subscription permanent identifier, SUPI): The identifier is a globally unique 5G subscription permanent identifier that is allocated to each subscriber in the 5G system.

The following describes in detail a security context update method provided in this application.

FIG. 2 is a schematic flowchart of a security context update method according to this application. A storage unit for storing a security context is disposed in UE. As shown in FIG. 2, the method includes the following steps.

S201: When first access of the UE enters a deregistered state from a first state, and second access of the UE is in the deregistered state or a null state, the UE stores a security context of the first access and a security context of the second access, where the first state is a state other than the null state and the deregistered state.

It should be noted that, in all embodiments of this application, storing the security context of the first access and/or the security context of the second access indicates storing a current security context of the first access and a current security context of the second access.

Optionally, the first access is that the terminal accesses a network by using a 3GPP access network (which may be referred to as "3GPP access" for short in this application), and the second access is that the terminal accesses a network by using a non-3GPP access network (which may be referred to as "non-3GPP access" for short in this application).

Optionally, the first access is non-3GPP access of the terminal, and the second access is 3GPP access of the terminal.

Optionally, 5G communication is used as an example. In this application, the deregistered state is a 5GMM-DEREGISTERED state, and the null state is a 5GMM-NULL state.

It can be learned that the solution in S201 may be understood as the following two cases:
(1) When both of the two types of access finally enter the deregistered state, the UE is triggered to store the security context of the first access and the security context of the second access.
(2) When the first access enters the deregistered state, and the second access is in the null state, the UE is triggered to store the security context of the first access and the security context of the second access.

It should be understood that a reason for storing the security context of the second access in (2) is as follows: In a possible scenario, both the first access and the second access have been registered with a network. Then, because the second access disables a 5G service, the second access enters the null state. When the first access enters the deregistered state from a registered state, the second access is in the null state. In this case, if the security context of the second access is not stored, the security context of the second access may be lost.

It should be understood that the access enters the deregistered state in two cases: one is to enter a common deregistered state, and the other is to enter a power-off state. In actual application, the two types of access can depend on the manufacturer to implement independent power-off and power-on.

In a specific implementation, to reduce a refresh frequency of a security context in a file and improve a service life of the storage unit, in S201, the UE is triggered to store the security context of the first access and the security context of the second access only when both of the two types of access are powered off; otherwise, the UE is not triggered to store the security context.

Optionally, the storage unit storing the security context of the first access and the security context of the second access may be a USIM of the UE or a non-volatile memory.

It should be noted that, when a service n°122 in a USIM service table (service table) is available (that is, supporting mobility management information of the 5G system), and a service n°136 in the USIM is available (that is, supporting multiple records of NAS security context storage functions for multiple registration), the UE stores the security context of the first access and the security context of the second access in the USIM. Otherwise, if the service n°122 or the service n°136 is unavailable, the UE stores the security context of the first access and the security context of the second access in the non-volatile memory.

Optionally, a first file in the storage unit is used to store the security context of the first access, a second file in the storage unit is used to store the security context of the second access, the first file includes a first record and a second record, and the second file includes a third record and a fourth record.

Optionally, a first security context in the first record corresponds to a first PLMN, a fourth security context in the fourth record corresponds to the first PLMN, and the first access has been registered with the first PLMN. In addition, a second security context in the second record corresponds to a second PLMN, a third security context in the third record corresponds to the second PLMN, and the second access has been registered with the second PLMN. That a first security context in the first record corresponds to a first PLMN may be understood as: The first security context corresponds to a globally unique temporary UE identity (globally unique temporary UE identity, GUTI) of the UE in the first PLMN. The GUTI is configured by the network device for the UE in a process of registering the first access with the first PLMN. The GUTI is stored in a location information (location information, LOCI) file corresponding to the first access of the UE. In short, the first record stores the security context of the first access of the first PLMN, the fourth record stores the security context of the second access of the first PLMN, the second record stores the security context of the first access of the second PLMN, and the third record stores the security context of the second access of the second PLMN. It may be understood that parameters such as a key and a security algorithm in the security context of the first access of the first PLMN may be the same as an identifier in the security context of the second access of the first PLMN; and parameters such as a NAS uplink/downlink count (count) in the security context of the first access of the first PLMN may be different from a NAS count in the security context of the second access of the first PLMN. The security context of the first access of the second PLMN is similar to that of the second access of the second PLMN, and details are not described herein again. That is, different types of access of the same PLMN correspond to respective NAS counts.

In the following, in this embodiment, an example in which the first access is 3GPP access, the second access is non-3GPP access, the storage unit is a USIM, the USIM includes EL_{5GS3GPPNSC} (that is, an example of the first file) and EF_{5GSN3GPPNSC} (that is, an example of the second file), EF_{5GS3GPPNSC} includes a record 1 and a record 2 (that is, an example of the first record and the second record), and EF_{5GSN3GPPNSC} also includes the record 1 and the record 2 (that is, an example of the third record and the fourth record) is used to specifically describe storage logic of storing the security context of the first access and the security context of the second access by the UE.
① When last registration of the 3GPP access before the 3GPP access enters the deregistered state fails, and a security context in which the 3GPP access is most recently successfully registered does not exist, the UE sets a security context in the record 1 of EL_{5GS3GPPNSC} and a security context in the record 2 of EF_{5GSN3GPPNSC} to be invalid.
   The security context that is most recently successfully registered may be understood as a current security context of the 3GPP access (that is, the first access) in the first PLMN, and the first PLMN is a PLMN with which the 3GPP access is most recently successfully registered.
② When last registration of the 3GPP access before the 3GPP access enters the deregistered state fails, and a security context in which the 3GPP access is most recently successfully registered exists (for ease of understanding, it is assumed herein that a PLMN #3 is the PLMN with which the 3GPP access is most recently successfully registered, that is, the security context in which the 3GPP access is most recently successfully registered includes the security context of the 3GPP access of the PLMN #3 and the security context of the non-3GPP access of the PLMN #3), the UE stores the security context of the 3GPP access of the PLMN #3 in the record 1 of EF_{5GS3GPPNSC}, and stores the security context of the non-3GPP access of the PLMN #3 in the record 2 of EF_{5GSN3GPPNSC}.
   Specifically, that last registration of the 3GPP access before the 3GPP access enters the deregistered state fails in ① and ② may be understood as: The 3GPP access initiates a last registration procedure on a PLMN, but is not successfully registered with the PLMN.
③ When last registration that the 3GPP access is registered with a PLMN #1 before the 3GPP access is in the deregistered state succeeds, the security context of the 3GPP access of the PLMN #1 is stored in the record 1 of EF_{5GS3GPPNSC}, and the security context of the non-3GPP access of the PLMN #1 is stored in the record 2 of EF_{5GSN3GPPNSC}.

It should be noted that, in this scenario, the UE further needs to store an identifier of the PLMN #1 in the record 2 of EF_{5GSN3GPPNSC}.

It should be understood that the security context in the record 1 of EF_{5GS3GPPNSC} corresponds to a GUTI of the UE in the PLMN #1. The GUTI is configured by the network device for the UE in a process of registering the first access with the PLMN #1, and is stored in an EF_{5GS3GPPLOCI} file of the UE. 5GS3GPPLOCI indicates 3GPP access location information of the 5G system.
④ When last registration of the non-3GPP access before the non-3GPP access enters the deregistered state fails, and a security context in which the non-3GPP access is most recently successfully registered does not exist, the UE sets the security context in the record 2 of EF_{5GS3GPPNSC} and the security context in the record 1 of EF_{5GSN3GPPNSC} to be invalid.
⑤ When last registration of the non-3GPP access before the non-3GPP access enters the deregistered state fails, and a security context in which the non-3GPP access is most recently successfully registered does not exist (for ease of understanding, it is assumed herein that a PLMN #4 is a PLMN with which the non-3GPP access is most recently successfully registered, that is, the security context in which the non-3GPP access is most recently successfully registered includes the security context of the 3GPP access of the PLMN #4 and the security context of the non-3GPP access of the PLMN #4), the UE stores the security context of the 3GPP access of the PLMN #4 in the record 2 of EF_{5GS3GPPNSC} based on the security context in which the non-3GPP access is most recently successfully registered, and stores the security context of the non-3GPP access of the PLMN #4 in the record 1 of EF_{5GSN3GPPNSC}.
⑥ When last registration that the non-3GPP access is registered with a PLMN #2 before the non-3GPP access enters the deregistered state succeeds, the security context of the 3GPP access of the PLMN #2 is stored in the record 2 of EF_{5GS3GPPNSC}, and the security context of the non-3GPP of the PLMN #2 is stored in the record 1 of EF_{5GSN3GPPNSC}.

It should be noted that, in this scenario, the UE further needs to store an identifier of the PLMN #2 in the record 2 of EF_{5GS3GPPNSC}.

It should be understood that the security context in the record 1 of EF_{5GSN3GPPNSC} corresponds to a GUTI of the UE in the PLMN #2. The GUTI is configured by the network device for the UE in a process of registering the second access with the PLMN #2. The GUTI is stored in an EF_{5GSN3GPPLOCI} file of the UE. 5GSN3GPPLOCI indicates non-3GPP access location information of the 5G system.

Optionally, the PLMN #1 in ③ and the PLMN #2 in ⑥ may be a same PLMN, or may be different PLMNs.

Optionally, when the PLMN #1 in ③ and the PLMN #2 in ⑥ are a same PLMN, that is, it indicates that the 3GPP access and the non-3GPP access are registered with a same PLMN, according to the storage logic in ③ and ⑥, both the record 1 and the record 2 of EF_{5GS3GPPNSC} store the security context of the 3GPP access of the PLMN #1, both the record 1 and the record 2 of EF_{5GSN3GPPNSC} store the security context of the non-3GPP access of the PLMN #1. Because the two records corresponding to EF_{5GS3GPPNSC} and EF_{5GSN3GPPNSC} store the same information, in this scenario, the security context in the record 2 of EF_{5GS3GPPNSC} and the security context in the record 2 of EF_{5GSN3GPPNSC} may be set to invalid (that is, the security context is not stored in the record 2).

It should be noted that currently, the UE does not support refreshing only one record in one file. That is, as long as one record in one file needs to be updated, the UE needs to refresh two records in the file. For example, the security context in the record 1 of the first file needs to be updated, and the security context in the record 2 of the first file does not need to be updated. In this case, during update, the UE updates the security context in the record 1, and also updates the security context in the record 2 to the record 2.

It should be further noted that, in scenarios ① and ④, the record 1 and the record 2 of EF_{5GS3GPPNSC} and the security contexts in the record 1 and the record 2 of EF_{5GSN3GPPNSC} are identified as invalid before the 3GPP access and the non-3GPP access enter the deregistered state. Therefore, in this case, the UE does not need to perform any storage operation on the two records in the two files, that is, the UE does not need to store the two records in the two files as invalid again.

It should be noted that, in this embodiment, only a file in the USIM is used as an example to describe storage logic of a security context. Actually, in the non-volatile memory or another possible storage unit, storage logic of two access security contexts is also the same, and a difference lies only in a file division manner. For example, the non-volatile memory may not be divided into the first file and the second file, and the same file includes the foregoing four records.

In addition, it can be learned from the foregoing that the 3GPP access and the non-3GPP access may simultaneously access the PLMN #1. In this case, because the GUTI of the UE in the PLMN #1 and the security context of the PLMN #1 are shared, the UE cannot distinguish, based on the GUTI and the security context, specific access that is successfully registered with the PLMN #1 before. However, currently, UE last visited registered tracking area identities (last visited registered tracking area identity, LVR TAI) of different types of access are independently managed by corresponding access. Therefore, in this application, whether the 3GPP access or the non-3GPP access is successfully registered with the PLMN #1 may be determined based on the LVR TAI.

It should be noted that the LVR TAI is only used as a possible determining condition provided in this application, and any condition for determining whether the 3GPP access or the non-3GPP access is successfully registered with the PLMN #1 may be used as the determining condition. This is not specifically limited in this application.

It should be understood that, to ensure validity of LVR TAI determining, when two types of access are registered with a same PLMN, and either of the two types of access is rejected by the network, a GUTI or a security context of the access is deleted, and the UE further needs to delete an LVR TAI of the other access.

For ease of understanding, in this embodiment, the LVR TAI is used as an example. Table 1 describes the storage logic of EF_{5GS3GPPNSC} and EF_{5GNS3GPPNSC} after the two types of access enter the deregistered state. For example, for storage logic in the scenario 1, refer to the storage logic ① and ④, for storage logic in the scenario 2, refer to the storage logic ① and ⑥, for storage logic in the scenario 3, refer to the storage logic ③ and ④, for storage logic in the scenario 4 and the scenario 5, refer to the storage logic ③ and ⑥, and for other possible scenarios, refer to the foregoing descriptions. Details are not described herein again.

**Table 1**

| | Scenario | | USIM file or non-volatile storage file | | | | | |
|---|---|---|---|---|---|---|---|---|
| | 3GPP access | Non-3GPP access | EF_{5GS3GPP LOCI} | EF_{5GS3GPPNSC} | | EF_{5GSN3GP PLOCI} | EF_{5GNS3GPPNSC} | |
| | | | | record 1 | record 2 | | record 1 | record 2 |
| Scenario l | LVR TAI of the 3GPP access does not exist | LVR TAI of the non-3GPP access does not exist | Invalid | Invalid | Invalid | Invalid | Invalid | Invalid |
| Scenario 2 | LVR TAI of the 3GPP access does not exist | LVR TAI1 of the non-3GPP access exists and the PLMN in the GUTI is a PLMN1 | Invalid | Invalid | 3gppNSC-PLMN1 | GUTI-PLMN1 | n3gppNSC -PLMN1 | Invalid |
| Scenario 3 | LVR TAI of the 3GPP access exists, and the PLMN in the GUTI is a PLMN 1 | LVR TAI of the non-3GPP access does not exist | GUTI-PLMN1 | 3gppNSC-PLMN1 | Invalid | Invalid | Invalid | n3gppNSC -PLMN1 |
| Scenario 4 | LVR TAI of the 3GPP access exists, and the PLMN in the GUTI is a PLMN 1 | LVR TAI of the non-3GPP access exists, and the PLMN in the GUTI is a PLMN1 | GUTI-PLMN1 | 3gppNSC-PLMN1 | Invalid (optional) | GUTI-PLMN1 | n3gppNSC -PLMN1 | Invalid (optional) |
| Scenario 5 | LVR TAI of the 3GPP access exists, and the PLMN in the GUTI is a PLMN 1 | LVR TAI of the non-3GPP access exists, and the PLMN in the GUTI is a PLMN2 | GUTI-PLMN1 | 3gppNSC-PLMN1 | 3gppNSC-PLMN2 | GUTI-PLMN2 | n3gppNSC -PLMN2 | n3gppNSC -PLMN1 |

It should be understood that invalidity in Table 1 means that content of the part is set to an invalid value according to a protocol. For a specific protocol definition specification, refer to the description in the standard. Details are not described herein again.

It should be further understood that S201 is merely a solution in which the UE may be triggered to store the security context. This application further provides another solution in which the UE may be triggered to store the security context. For details, refer to the description in S201'.

S201': When first access enters a deregistered state from a first state, the UE stores a security context of the first access, where the first state is a state other than the null state and the deregistered state. When second access of the terminal enters the deregistered state, a security context of the second access is stored.

Optionally, when a current security context of the second access changes, and the first access is in the deregistered state or the null state, the UE stores the security context of the first access based on the current security context of the second access. It should be understood that when the current security context of the second access changes, it indicates that the security context of the PLMN currently accessed by the second access changes.

It should be further understood that the "current security context" in the current security context of the second access is only a changed current security context.

It should be further understood that, when the first access is in the deregistered state or the null state, refresh of the stored security context of the first access is triggered by change of the current context of the second access. Optionally, the first access is 3GPP access of the terminal, and the second access is non-3GPP access of the terminal.

Optionally, the first access is non-3GPP access of the terminal, and the second access is 3GPP access of the terminal.

Optionally, 5G communication is used as an example. In this application, the deregistered state is a 5GMM-DEREGISTERED state, and the null state is a 5GMM-NULL state.

Optionally, that the current security context of the second access changes includes generation, update, or deletion of the current security context of the second access. The update includes update of a key or an algorithm, and does not include update of a NAS uplink/downlink count (count). For example, that the security context changes may include: (1) A created security context is successfully performed in an AKA based primary authentication and key agreement (AKA based primary authentication and key agreement) procedure or during EAP based primary authentication and key agreement (EAP based primary authentication and key agreement), and the network uses the security context by using a security mode control (security mode control) procedure; (2) the network changes a security algorithm of the current NAS security context by using the security mode control procedure; (3) the network provides a selected EPS NAS security (security) algorithm by using the security mode control procedure; and (4) the network performs horizontal derivation on the current security context by using the security mode control procedure, and after horizontal derivation, the newly derived security context is used. The foregoing (1) and (4) may be understood as generation of the current security context, and the foregoing (2) and (3) may be understood as update of the current security context. In summary, that the security context changes includes: The security context is used after being generated, or the current security context algorithm is updated or deleted.

It may be understood that when the current security context of the second access changes, and the first access is in the deregistered state or the null state, the UE stores the security context of the first access. The UE stores the security context of the first access based on the changed current security context of the second access. Based on the foregoing example, the UE stores, in the record 2 of EF_{5GS3GPPNSC}, the security context corresponding to the changed current security context of the second access. Storing the security context corresponding to the changed current security context of the second access may be understood as directly storing the changed current security context of the second access, or may be understood as deleting or processing the changed current security context of the second access and then storing the current security context.

It can be learned that, a difference from the solution in S201 lies in that, in S201, storage of the security context is triggered only after two types of access finally enter the deregistered state. In S201', "when first access enters a deregistered state from a first state, the UE stores a security context of the first access" is that storage of the security context of the corresponding access is triggered after either of the two types of access enters the deregistered state.

In S201', "when the current security context of the second access changes, and the first access is in the deregistered state or the null state, the UE stores the security context of the first access" may be understood in the following two manners.
(1) When the current security context of the second access changes, the first access is in the deregistered state, and the UE is triggered to store the security context of the first access.
(2) When the current security context of the second access changes, the first access is in the null state, and the UE is triggered to store the security context of the first access.

It should be understood that a reason for storing the security context of the first access in (2) is as follows: In a possible scenario, the first access has been registered with a network, and then the first access enters the null state because the first access disables a 5G service. If the security context of the first access is not stored, the security context of the first access may be lost when the security context of the second access changes.

It should be understood that the access enters the deregistered state in two cases: one is to enter a common deregistered state, and the other is to enter a power-off state. In actual application, the two types of access can depend on the manufacturer to implement independent power-off and power-on.

In a specific implementation, to reduce a refresh frequency of a security context in a file and improve a service life of the storage unit, in the solution in S201', the UE is triggered to store the security context of the first access only when the first access is in a power-off state.

Optionally, the storage unit storing the security context of the first access and the security context of the second access may be a USIM of the UE or a non-volatile memory. For storage principles of the USIM and the non-volatile memory, refer to the foregoing descriptions. Details are not described herein again.

Optionally, a first file of the UE is used to store the security context of the first access, a second file of the UE is used to store the security context of the second access, the first file includes a first record and a second record, and the second file includes a third record and a fourth record.

Optionally, a first file in the storage unit is used to store the security context of the first access, a second file in the storage unit is used to store the security context of the second access, the first file includes a first record and a second record, and the second file includes a third record and a fourth record. For content stored in the first record, the second record, the third record, and the fourth record, refer to the foregoing descriptions. Details are not described herein again.

For ease of understanding, 5G communication is used as an example. The deregistered state is a 5GMM-DEREGISTERED state, and the null state is 5GMM-NULL.

In the following, in this embodiment, an example in which the first access is 3GPP access, the second access is non-3GPP access, the storage unit is a USIM, the USIM includes EF_{5GS3GPPNSC} (that is, an example of the first file) and EF_{5GSN3GPPNSC} (that is, an example of the second file), EF_{5GS3GPPNSC} includes a record 1 and a record 2 (that is, an example of the first record and the second record), and EF_{5GSN3GPPNSC} also includes the record 1 and the record 2 (that is, an example of the third record and the fourth record) is used to specifically describe storage logic of the security context.

Storage logic of "when first access enters a deregistered state from a first state, the UE stores a security context of the first access" in S201' is described below.
① When last registration of the 3GPP access before the 3GPP access enters the deregistered state fails, a security context in which the 3GPP access is most recently successfully registered does not exist, and the non-3GPP access currently accesses a PLMN #2, the UE sets the security context in the record 1 of EF_{5GS3GPPNSC} to be invalid, and stores the security context of the 3GPP access of the PLMN #2 in the record 2 of EF_{5GS3GPPNSC}.
② When last registration of the 3GPP access before the 3GPP access enters the deregistered state fails, a security context in which the 3GPP access is most recently successfully registered exists (for ease of understanding, it is assumed herein that a PLMN #3 is a PLMN with which the 3GPP access is most recently successfully registered, that is, the security context in which the 3GPP access is most recently successfully registered includes the security context of the 3GPP access of the PLMN #3 and the security context of the non-3GPP access of the PLMN #3), and the non-3GPP access currently accesses the PLMN #2, the UE stores the security context of the 3GPP access of the PLMN #3 in the record 1 of EF_{5GS3GPPNSC}, and stores the security context of the 3GPP access of the PLMN #2 in the record 2 of EF_{5GS3GPPNSC}.
③ When last registration that the 3GPP access is registered with a PLMN #1 before the 3GPP access is in the deregistered state succeeds, and the non-3GPP access currently accesses the PLMN #2, the UE stores the security context of the 3GPP access of the PLMN #1 in record 1 of EF_{5GS3GPPNSC}, and stores the security context of the 3GPP access of the PLMN #2 in the record 2 of EF_{5GS3GPPNSC}.
   Optionally, the PLMN #1 and the PLMN #2 in the logic ③ may be a same PLMN, or may be different PLMNs.
④ When last registration that the 3GPP access is registered with the PLMN #1 before the 3GPP access is in the deregistered state succeeds, and the non-3GPP access currently accesses the PLMN #1 (that is, the 3GPP access and the non-3GPP access are registered with the same PLMN), the UE stores the security context of the 3GPP access of the PLMN #1 in the record 1 of EF_{5GS3GPPNSC}, and sets the security context in the record 2 of EF_{5GS3GPPNSC} to be invalid.

In this case, on the basis that the PLMN #1 and the PLMN #2 in the logic ①, the logic ②, or the logic ③ are different, storage logic ⑤ of "when the current security context of the second access changes, and the first access is in the deregistered state or the null state, the UE stores the security context of the first access" in S201' is: The UE stores the security context in the record 1 of EF_{5GS3GPPNSC} again in the record 1 of EF_{5GS3GPPNSC} (that is, a refresh operation is performed on the record 1 but content of the security context remains unchanged), and stores the current security context of the non-3GPP access of the PLMN #2 in the record 2 of EF_{5GS3GPPNSC}.

It should be noted that the "current security context" in the current security context of the non-3GPP access of the PLMN #2 stored in the record 2 of EF_{5GS3GPPNSC} is only a changed current security context.

On the basis that the PLMN #1 and the PLMN #2 in logic 3 are the same, storage logic ⑥ of "when the current security context of the second access changes, and the first access is in the deregistered state or the null state, the UE stores the security context of the first access" in S201' is: The UE stores the security context of the 3GPP access of the PLMN #1 in the record 1 of EF_{5GS3GPPNSC}, and stores the security context of the 3GPP access of the PLMN #2 in the record 2 of EF_{5GS3GPPNSC}. That is, the record 1 and the record 2 of EF_{5GS3GPPNSC} store the same security context.

It should be understood that a reason for updating the record 1 of EF_{5GS3GPPNSC} in logic ⑥ is that both the two types of access are registered with the PLMN #1. When the security context of the second access (that is, the non-3GPP access) changes, both the security context of the 3GPP access and the security context of the non-3GPP access of the PLMN #1 change.

On the basis of logic ④, storage logic ⑦ of "when the current security context of the second access changes, and the first access is in the deregistered state or the null state, the UE stores the security context of the first access" in S201' is: The UE stores the security context of the 3GPP access of the PLMN #1 in the record 1 of EF_{5GS3GPPNSC}, and sets the record 2 of EF_{5GS3GPPNSC} to be invalid.

It should be understood that, a reason for storing the security context of the 3GPP access of the PLMN #1 only in the record 1 of EF_{5GS3GPPNSC} in logic ⑦ is that both the two types of access are registered with the PLMN #1, that is, security contexts stored in the record 1 and the record 2 of EF_{5GS3GPPNSC} are the same. In this case, the UE may store the security context only in the record 1 of EF_{5GS3GPPNSC}.

It can be learned that, in the foregoing embodiment, storage logic of entering the deregistered state of the first access and change of storage logic of the security context of the first access after the first access enters the deregistered state due to change of the current security context of the second access are described. The storage logic of entering the deregistered state of the second access and the corresponding impact of the first access on the storage logic of the second access are not described herein again.

The foregoing specifically describes multiple records of security context storage for multiple registration. The following describes in detail an occasion of reading a security context in this application.

S202: When the first access enters the first state from the deregistered state, and the second access is in the deregistered state or the null state, the UE reads the security context of the first access and the security context of the second access from the storage unit, and identifies the security context of the first access and the security context of the second access stored in the storage unit as invalid. The first state is a state other than the deregistered state and the null state. Otherwise, a local security context (a security context in a memory) of the UE is directly used, and no read operation is performed.

It should be understood that the reading solution in S202 is used together with the storage solution in S201.

Correspondingly, the storage solution in S201' and the reading solution in S202' are used together.

S202': When the first access enters the first state from the deregistered state, the UE reads the security context of the first access from the storage unit, and identifies the security context of the first access stored in the storage unit as invalid.

Optionally, in S202 and S202', the UE may be triggered to read the security context only when the first access is powered on.

Specifically, for S202, after one type of access is powered on, the other access is checked. If the other access is not powered on, security contexts of the two types of access are read from the storage unit, and the security contexts of the two types of access in the storage unit are identified as invalid. Otherwise, no reading operation is performed, and a local security context (the security context in the memory) of the UE is directly used. This solution is used together with the solution of storing the security context only when the UE is powered off in S201.

Specifically, for S202', that is, after one type of access is powered on, security context information of the access is read, and a security context corresponding to the access in the storage unit is identified as invalid. This solution is used together with the solution of storing the security context only during power-off in S201'.

Optionally, the storage unit may be a USIM of the UE or a non-volatile memory.

It should be noted that, when a service n°122 in a USIM service table (service table) is available (that is, supporting mobility management information of the 5G system), and a service n°136 in the USIM is available (that is, supporting multiple records of NAS security context storage functions for multiple registration), the UE reads the security context of the first access and/or the second access from the USIM. Otherwise, if the service n°122 or the service n°136 is unavailable, the UE reads the security context of the first access and/or the second access from the non-volatile memory.

It should be understood that, the foregoing example in which the security context is stored in the first file and the second file is used. Reading the security context of the first access indicates reading the security context from the first record and the second record of the first file, and identifying the security context in the first record and the second record as invalid after reading. Reading the security context of the second access indicates reading the security context from the third record and the fourth record of the second file, and identifying the security context in the third record and the fourth record as invalid after reading.

For ease of understanding, an example in which the first access is 3GPP access, the second access is non-3GPP access, the storage unit is a USIM, and the USIM includes EF_{5GS3GPPNSC} (that is, an example of the first file) and EF_{5GSN3GPPNSC} (that is, an example of the second file) is still used herein to specifically describe a principle of using a read security context.

It should be noted that, when the USIM supports multiple records of NAS security context storage for multiple registration, and an SUPI stored in the non-volatile memory is inconsistent with that of the USIM, the processing procedure is described below.
(1) If the UE does not support a non-3GPP access capability, security contexts of two records in the non-3GPP security context file (that is, EF_{5GSN3GPPNSC}) are set to invalid.
   Specific reasons are as follows: If a USIM card has been used on a mobile phone supporting the non-3GPP access capability, a security context may be stored in the non-3GPP access. If the security context is not deleted, the security context does not match information in a GUTI when the USIM card is inserted into a mobile phone that does not support the non-3GPP access capability.
(2) If the UE supports a non-3GPP access capability, two records in the 3GPP security context file (that is, EF_{5GS3GPPNSC}) have security contexts, and the security contexts of the two records in the non-3GPP security context file (that is, EF_{5GSN3GPPNSC}) are invalid, the two records of the security contexts of the two types of access are set to invalid.

Specific reasons are as follows: If a USIM card has been used on a mobile phone that does not support the non-3GPP access capability, no security context information exists in the non-3GPP security context, and security context information exists in the 3GPP access. As a result, security context maintenance in the non-3GPP access is inconsistent with that in the 3GPP access, which brings risks to subsequent use.

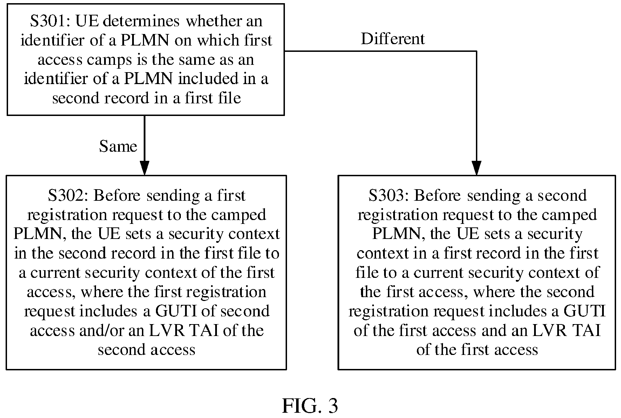

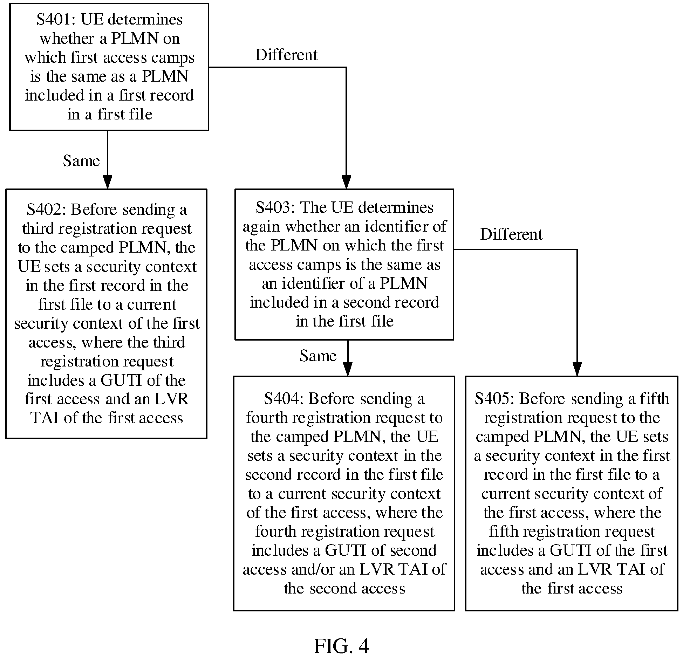

The following describes two possible usage principles after the UE reads the security context of the first access (that is, reads the first record and the second record of the first file). For details, refer to descriptions in FIG. 3 and FIG. 4.

FIG. 3 is a schematic flowchart of a principle of using the read security context of the first access according to this application.

S301: The UE determines whether an identifier of a PLMN on which the first access camps is the same as an identifier of a PLMN included in the second record in the first file. If the identifier of the PLMN on which the first access camps is the same as the identifier of the PLMN included in the second record in the first file, refer to S302. If the identifier of the PLMN on which the first access camps is different from the identifier of the PLMN included in the second record in the first file, refer to S303.

S302: If the identifier of the PLMN on which the first access camps is the same as the identifier of the PLMN included in the second record in the first file, before sending a first registration request to the camped PLMN, the UE sets the security context in the second record in the first file to a current security context of the first access, where the first registration request includes a GUTI of the second access and/or an LVR TAI of the second access.

S303: If the identifier of the PLMN on which the first access camps is different from the identifier of the PLMN included in the second record in the first file, before sending a second registration request to the camped PLMN, the UE sets the security context in the first record in the first file to the current security context of the first access, where the second registration request includes a GUTI of the first access and an LVR TAI of the first access.

FIG. 4 is a schematic flowchart of another principle of using the read security context of the first access according to this application.

S401: The UE determines whether an identifier of a PLMN on which the first access camps is the same as an identifier of a PLMN included in the first record in the first file. If the identifier of the PLMN on which the first access camps is the same as the identifier of the PLMN included in the first record in the first file, refer to S402. If the identifier of the PLMN on which the first access camps is different from the identifier of the PLMN included in the first record in the first file, refer to S403.

S402: If the identifier of the PLMN on which the first access camps is the same as the identifier of the PLMN included in the first record in the first file, before sending a third registration request to the camped PLMN, the UE sets the security context in the first record in the first file to a current security context of the first access, where the third registration request includes a GUTI of the first access and an LVR TAI of the first access.

S403: If the identifier of the PLMN on which the first access camps is different from the identifier of the PLMN included in the first record in the first file, the UE determines again whether the identifier of the PLMN on which the first access camps is the same as an identifier of a PLMN included in the second record in the first file. If the identifier of the PLMN on which the first access camps is the same as the identifier of the PLMN included in the second record in the first file, refer to S404. If the identifier of the PLMN on which the first access camps is different from the identifier of the PLMN included in the second record in the first file, refer to S405.

S404: If the identifier of the PLMN on which the first access camps is the same as the identifier of the PLMN included in the second record in the first file, before sending a fourth registration request to the camped PLMN, the UE sets the security context in the second record in the first file to the current security context of the first access, where the fourth registration request includes a GUTI of the second access and/or an LVR TAI of the second access.

S405: If the identifier of the PLMN on which the first access camps is different from the identifier of the PLMN included in the second record in the first file, before sending a fifth registration request to the camped PLMN, the UE sets the security context in the first record in the first file to the current security context of the first access, where the fifth registration request includes the GUTI of the first access and the LVR TAI of the first access.

The foregoing describes in detail the security context update method provided in this application. The following describes a communication apparatus provided in this application.

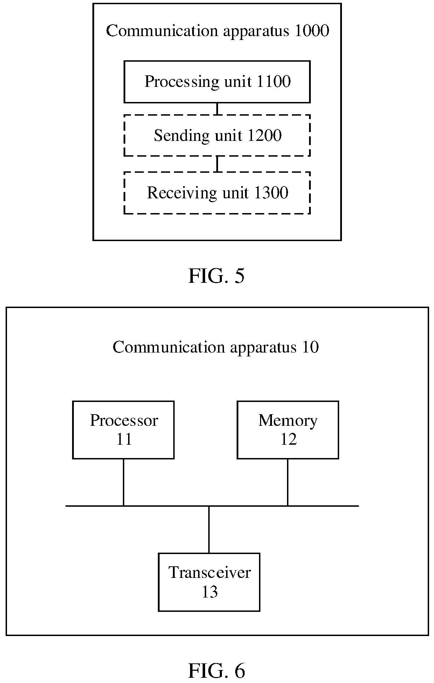

FIG. 5 is a schematic block diagram of a communication apparatus 1000 according to this application.

In a possible design, the communication apparatus 1000 includes a processing unit 1100. The communication apparatus 1000 may implement steps or procedures performed by the terminal in the foregoing method embodiments. For example, the communication apparatus 1000 may be a terminal, or may be a chip or a circuit configured in a terminal. A receiving unit 1100 is configured to perform receiving-related operations of the terminal in the foregoing method embodiments, and the processing unit 1200 is configured to perform processing-related operations of the terminal in the foregoing method embodiments.

In a possible implementation, the processing unit 1100 is configured to store a security context of first access and a security context of second access when the first access of the terminal and the second access of the terminal enter a deregistered state. The first access is that the terminal accesses a network by using a 3rd generation partnership project 3GPP access network, and the second access is that the terminal accesses a network by using a non-3GPP access network; or the first access is that the terminal accesses a network by using a non-3GPP access network, and the second access is that the terminal accesses a network by using a 3GPP access network.

Optionally, the deregistered state includes power-off.

Optionally, the storing a security context of first access and a security context of second access includes: storing the security context of the first access and the security context of the second access in a storage unit. The storage unit is a universal subscriber identity module USIM or a non-volatile memory.

Optionally, a first file of the terminal is used to store the security context of the first access, a second file of the terminal is used to store the security context of the second access, the first file includes a first record and a second record, and the second file includes a third record and a fourth record.

Optionally, a first security context in the first record corresponds to a first public land mobile network PLMN, a fourth security context in the fourth record corresponds to the first PLMN, and the first access has been registered with the first PLMN.

Optionally, a second security context in the second record corresponds to a second PLMN, a third security context in the third record corresponds to the second PLMN, and the second access has been registered with the second PLMN.

Optionally, the processing unit 1100 is specifically configured to: store the first security context in the first record, and store the fourth security context in the fourth record. The first PLMN is a PLMN with which the first access is registered and is successfully registered last time before the first access enters the deregistered state.

Optionally, the processing unit 1100 is specifically configured to: when last registration of the first access before the first access enters the deregistered state fails, and a security context in which the first access is most recently successfully registered exists, store the first security context in the first record, and store the fourth security context in the fourth record based on the security context in which the first access is most recently successfully registered. The first PLMN is a PLMN with which the first access is most recently successfully registered.

Optionally, the processing unit 1100 is specifically configured to: when last registration of the first access before the first access enters the deregistered state fails, and a security context in which the first access is most recently successfully registered does not exist, set the security context in the first record and the security context in the fourth record to be invalid.

Optionally, the processing unit 1100 is specifically configured to: store the second security context in the second record, and store the third security context in the third record. The second PLMN is a PLMN with which the second access is registered and is successfully registered last time before the second access enters the deregistered state.

Optionally, the processing unit 1100 is specifically configured to: when last registration of the second access before the second access enters the deregistered state fails, and a security context in which the second access is most recently successfully registered exists, store the second security context in the second record, and store the third security context in the third record based on the security context in which the second access is most recently successfully registered. The second PLMN is a PLMN with which the second access is most recently successfully registered.

Optionally, the processing unit 1100 is specifically configured to: when last registration of the second access before the second access enters the deregistered state fails, and a security context in which the second access is most recently successfully registered does not exist, set the security context in the second record and the security context in the third record to be invalid.

Optionally, the processing unit 1100 is specifically configured to: when last registration of the first access before the first access enters the deregistered state fails, and a security context in which the first access is most recently successfully registered does not exist, and when last registration of the second access before the second access enters the deregistered state fails, and a security context in which the second access is most recently successfully registered does not exist, keep information in the first record, the second record, the third record, and the fourth record unchanged.

Optionally, the processing unit 1100 is specifically configured to: store the first security context in the first record, store the third security context in the third record, and set the security context in the second record and the security context in the fourth record to be invalid. The first PLMN is a PLMN with which the first access is registered and is successfully registered last time before the first access enters the deregistered state, and the second PLMN is a PLMN with which the second access is registered and is successfully registered last time before the second access enters the deregistered state.

Optionally, it is determined, based on a last visited registered tracking area identity LVR TAI of third access, whether the third access is successfully registered with a third PLMN. The third access is the first access or the second access, and the third PLMN corresponds to the LVR TAI.

Optionally, when the first access enters a first state from the deregistered state, and the second access is in the deregistered state or a null state, the UE reads the security context of the first access and the security context of the second access from the storage unit, and identifies the security context of the first access and the security context of the second access stored in the storage unit as invalid. The first state is a state other than the deregistered state and the null state. Otherwise, a local security context (a security context in a memory) of the terminal is directly used, and no read operation is performed.

Optionally, the first state includes power-on.

Optionally, the terminal determines whether an identifier of a PLMN on which the first access camps is the same as an identifier of a PLMN included in the second record in the first file. If the identifier of the PLMN on which the first access camps is the same as the identifier of the PLMN included in the second record in the first file, before sending a first registration request to the camped PLMN, the terminal sets the security context in the second record in the first file to a current security context of the first access. The first registration request includes a GUTI of the second access and/or an LVR TAI of the second access. If the identifier of the PLMN on which the first access camps is different from the identifier of the PLMN included in the second record in the first file, before sending a second registration request to the camped PLMN, the terminal sets the security context in the first record in the first file to the current security context of the first access. The second registration request includes a GUTI of the first access and an LVR TAI of the first access.

Optionally, the UE determines whether an identifier of a PLMN on which the first access camps is the same as an identifier of a PLMN included in the first record in the first file. If the identifier of the PLMN on which the first access camps is the same as the identifier of the PLMN included in the first record in the first file, before sending a third registration request to the camped PLMN, the UE sets the security context in the first record in the first file to a current security context of the first access. The third registration request includes a GUTI of the first access and an LVR TAI of the first access. If the identifier of the PLMN on which the first access camps is different from the identifier of the PLMN included in the first record in the first file, the terminal determines again whether the identifier of the PLMN on which the first access camps is the same as an identifier of a PLMN included in the second record in the first file. If the identifier of the PLMN on which the first access camps is the same as the identifier of the PLMN included in the second record in the first file, before sending a fourth registration request to the camped PLMN, the UE sets the security context in the second record in the first file to the current security context of the first access. The fourth registration request includes a GUTI of the second access and/or an LVR TAI of the second access. If the identifier of the PLMN on which the first access camps is different from the identifier of the PLMN included in the second record in the first file, before sending a fifth registration request to the camped PLMN, the UE sets the security context in the first record in the first file to the current security context of the first access. The fifth registration request includes the GUTI of the first access and the LVR TAI of the first access.

In another possible implementation, the processing unit 1100 is configured to: when first access of the terminal enters a deregistered state, store a security context of the first access; or when second access of the terminal enters a deregistered state, store a security context of the second access. The first access is that the terminal accesses a network by using a 3rd generation partnership project 3GPP access network, and the second access is that the terminal accesses a network by using a non-3GPP access network; or the first access is that the terminal accesses a network by using a non-3GPP access network, and the second access is that the terminal accesses a network by using a 3GPP access network.

Optionally, when the first access is in the deregistered state, and a current security context of the second access changes, the security context of the first access is stored based on the current security context of the second access.

Optionally, when the current security context of the second access changes, and the second access enters the deregistered state again, the security context of the second access is stored based on the current security context of the second access.

Optionally, that the current security context of the second access changes includes generation, update, or deletion of the current security context of the second access.

Optionally, the update does not include update of a non-access stratum NAS uplink/downlink count.

Optionally, the deregistered state includes power-off.

Optionally, the storing a security context of the first access includes: storing the security context of the first access in a storage unit. The storage unit is a universal subscriber identity module USIM or a non-volatile memory.

Optionally, a first file of the terminal is used to store the security context of the first access, a second file of the terminal is used to store the security context of the second access, the first file includes a first record and a second record, and the second file includes a third record and a fourth record.

Optionally, a first security context in the first record corresponds to a first public land mobile network PLMN, a fourth security context in the fourth record corresponds to the first PLMN, and the first access has been registered with the first PLMN.

Optionally, a second security context in the second record corresponds to a second PLMN, a third security context in the third record corresponds to the second PLMN, and the second access has been registered with the second PLMN.

Optionally, the processing unit 1100 is specifically configured to: when last registration of the first access before the first access enters the deregistered state fails, and a security context in which the first access is most recently successfully registered does not exist, set the security context in the first record to be invalid, and store the second security context in the second record. The second PLMN is a PLMN currently accessed by the second access.

Optionally, the processing unit 1100 is specifically configured to: when last registration of the first access before the first access enters the deregistered state fails, and a security context in which the first access is most recently successfully registered exists, store the first security context in the first record, and store the second security context in the second record based on the security context in which the first access is most recently successfully registered. The first PLMN is a PLMN with which the first access is most recently successfully registered, and the second PLMN is a PLMN currently accessed by the second access.

Optionally, the processing unit 1100 is specifically configured to: store the first security context in the first record, and store the second security context in the second record. The first PLMN is a PLMN with which the first access is registered and is successfully registered last time before the first access enters the deregistered state, and the second PLMN is a PLMN currently accessed by the second access.

Optionally, that the processing unit 1100 is specifically configured to: when the first access is in the deregistered state, and the current security context of the second access changes, store the security context of the first access based on the current security context of the second access includes: when the first access is in the deregistered state, and the current security context of the second access changes, storing the first security context in the first record, and storing a fifth security context in the second record. The fifth security context corresponds to the current security context of the second access.

Optionally, that the processing unit 1100 is specifically configured to: when the current security context of the second access changes, and the second access enters the deregistered state again, store the security context of the second access based on the current security context of the second access includes:
when the current security context of the second access changes, and the second access enters the deregistered state again, storing a sixth security context in the third record, where the sixth security context corresponds to the current security context of the second access; and storing the fourth security context in the fourth record.

Optionally, the processing unit 1100 is specifically configured to: store the security context of the first access of the first PLMN in the first record, and set the security context in the second record to be invalid. The first PLMN is a PLMN with which the first access is registered and is successfully registered last time before the first access enters the deregistered state, and the second PLMN is a PLMN currently accessed by the second access.

Optionally, the processing unit 1100 is specifically configured to: store the first security context in the first record, and set the security context in the second record to be invalid.

Optionally, it is determined, based on a last visited registered tracking area identity LVR TAI of third access, whether the third access is successfully registered with a third PLMN. The third access is the first access or the second access, and the third PLMN corresponds to the LVR TAI.

Optionally, the terminal reads the security context of the first access from the storage unit, and identifies the security context of the first access stored in the storage unit as invalid.

Optionally, the first state includes power-on.

Optionally, the terminal determines whether an identifier of a PLMN on which the first access camps is the same as an identifier of a PLMN included in the second record in the first file. If the identifier of the PLMN on which the first access camps is the same as the identifier of the PLMN included in the second record in the first file, before sending a first registration request to the camped PLMN, the terminal sets the security context in the second record in the first file to a current security context of the first access. The first registration request includes a GUTI of the second access and/or an LVR TAI of the second access. If the identifier of the PLMN on which the first access camps is different from the identifier of the PLMN included in the second record in the first file, before sending a second registration request to the camped PLMN, the terminal sets the security context in the first record in the first file to the current security context of the first access. The second registration request includes a GUTI of the first access and an LVR TAI of the first access.

Optionally, the UE determines whether an identifier of a PLMN on which the first access camps is the same as an identifier of a PLMN included in the first record in the first file. If the identifier of the PLMN on which the first access camps is the same as the identifier of the PLMN included in the first record in the first file, before sending a third registration request to the camped PLMN, the UE sets the security context in the first record in the first file to a current security context of the first access. The third registration request includes a GUTI of the first access and an LVR TAI of the first access. If the identifier of the PLMN on which the first access camps is different from the identifier of the PLMN included in the first record in the first file, the terminal determines again whether the identifier of the PLMN on which the first access camps is the same as an identifier of a PLMN included in the second record in the first file. If the identifier of the PLMN on which the first access camps is the same as the identifier of the PLMN included in the second record in the first file, before sending a fourth registration request to the camped PLMN, the UE sets the security context in the second record in the first file to the current security context of the first access. The fourth registration request includes a GUTI of the second access and/or an LVR TAI of the second access. If the identifier of the PLMN on which the first access camps is different from the identifier of the PLMN included in the second record in the first file, before sending a fifth registration request to the camped PLMN, the UE sets the security context in the first record in the first file to the current security context of the first access. The fifth registration request includes the GUTI of the first access and the LVR TAI of the first access.

Optionally, the communication apparatus 1000 may further include a sending unit 1200 and a receiving unit 1300. The sending unit 1300 and the receiving unit 1100 may alternatively be integrated into one transceiver unit, and have both receiving and sending functions. This is not limited herein.

Optionally, in an implementation in which the communication apparatus 1000 is the terminal in the method embodiment, the sending unit 1200 may be a transmitter, and the receiving unit 1300 may be a receiver. Alternatively, the receiver and the transmitter may be integrated into a transceiver. The processing unit 1100 may be a processing apparatus.

Optionally, in an implementation in which the communication apparatus 1000 is a chip or an integrated circuit installed in a terminal, the sending unit 1200 and the receiving unit 1300 may be a communication interface or an interface circuit. For example, the sending unit 1200 is an output interface or an output circuit, the receiving unit 1200 is an input interface or an input circuit, and the processing unit 1100 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the terminal in the method embodiments. Optionally, the processing apparatus may include only the processor, and the memory configured to store the computer program is located outside the processing apparatus. The processor is connected to the memory through a circuit/wire to read and execute the computer program stored in the memory. For another example, the processing apparatus may be a chip or an integrated circuit.

As shown in FIG. 6, an embodiment of this application provides another transmission mode switching apparatus 10. The apparatus 10 includes a processor 11. The processor 11 is coupled to a memory 12. The memory 12 is configured to store a computer program or instructions and/or data. The processor 11 is configured to execute the computer program or the instructions stored in the memory 12, or read the data stored in the memory 12, to perform the methods in the foregoing method embodiments.

Optionally, there are one or more processors 11.

Optionally, there are one or more memories 12.

Optionally, the memory 12 and the processor 11 are integrated together, or separately disposed.

Optionally, as shown in FIG. 6, the apparatus 10 further includes a transceiver 13, and the transceiver 13 is configured to receive and/or send a signal. For example, the processor 11 is configured to control the transceiver 13 to receive and/or send the signal.

In a solution, the apparatus 10 is configured to implement operations performed by the terminal in the foregoing method embodiments.

For example, the processor 11 is configured to execute the computer program or the instructions stored in the memory 12, to implement related operations of the terminal in the foregoing method embodiments. For example, the method performed by the terminal in the embodiment shown in any one of FIG. 2 to FIG. 4 is implemented.

It should be understood that the processor in this embodiment of this application may be an integrated circuit chip, and has a signal processing capability. In an implementation process, the steps in the foregoing method embodiments can be implemented by a hardware integrated logical circuit in the processor, or by using instructions in a form of software. The processor may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

The memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA, another programmable logic device, a discrete gate or a transistor logic device, or a discrete hardware component, the memory (a storage module) may be integrated into the processor.

It should further be noted that the memory described in this specification aims to include but is not limited to these memories and any memory of another proper type.

In addition, this application further provides a computer-readable storage medium. The computer-readable storage medium stores computer instructions. When the computer instructions are run on a computer, operations and/or procedures performed by the terminal in the method embodiments of this application are performed.

This application further provides a computer program product. The computer program product includes computer program code or instructions. When the computer program code or the instructions are run on a computer, operations and/or procedures performed by the terminal in the method embodiments of this application are performed.

In addition, this application further provides a chip. The chip includes a processor. A memory configured to store a computer program is disposed independent of the chip. The processor is configured to execute the computer program stored in the memory, to perform operations and/or processing performed by the terminal in any method embodiment.

Further, the chip may further include a communication interface. The communication interface may be an input/output interface, an interface circuit, or the like. Further, the chip may further include the memory.

In addition, this application further provides a communication system, including the terminal in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit.

The term "and/or" in this application describes only an association relationship between associated objects and represents that three relationships may exist. For example, A and/or B may represent the following three cases: Only A exists, both A and B exist, and only B exists. A, B, and C each may be singular or plural. This is not limited.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A security context update method, performed by a terminal, and comprising:
in a condition that the terminal has first access and second access,
storing a security context of the first access and a security context of the second access only when both the first access of the terminal and the second access of the terminal enter a deregistered state, wherein
the first access is that the terminal accesses a network by using a 3rd generation partnership project 3GPP access network, and the second access is that the terminal accesses a network by using a non-3GPP access network; or the first access is that the terminal accesses a network by using a non-3GPP access network, and the second access is that the terminal accesses a network by using a 3GPP access network.

2. The method according to claim 1, wherein the deregistered state comprises power-off.

3. The method according to claim 1 or 2, wherein the storing a security context of the first access and a security context of the second access comprises:
storing the security context of the first access and the security context of the second access in a storage unit, wherein the storage unit is a universal subscriber identity module USIM or a non-volatile memory.

4. The method according to any one of claims 1 to 3, wherein a first file of the terminal is used to store the security context of the first access, a second file of the terminal is used to store the security context of the second access, the first file comprises a first record and a second record, and the second file comprises a third record and a fourth record.

5. The method according to claim 4, wherein a first security context in the first record corresponds to a first public land mobile network PLMN, a fourth security context in the fourth record corresponds to the first PLMN, and the first access has been registered with the first PLMN.

6. The method according to claim 5, wherein a second security context in the second record corresponds to a second PLMN, a third security context in the third record corresponds to the second PLMN, and the second access has been registered with the second PLMN.

7. The method according to claim 6, wherein the storing a security context of the first access and a security context of the second access comprises:
storing the first security context in the first record, and storing the fourth security context in the fourth record, wherein the first PLMN is a PLMN with which the first access is registered and is successfully registered last time before the first access enters the deregistered state.

8. The method according to claim 6, wherein the storing a security context of the first access and a security context of the second access comprises:
when last registration of the first access before the first access enters the deregistered state fails, and a security context in which the first access is most recently successfully registered exists, storing the first security context in the first record, and storing the fourth security context in the fourth record based on the security context in which the first access is most recently successfully registered, wherein the first PLMN is a PLMN with which the first access is most recently successfully registered.

9. The method according to claim 6, wherein the storing a security context of the first access and a security context of the second access comprises:
when last registration of the first access before the first access enters the deregistered state fails, and a security context in which the first access is most recently successfully registered does not exist, setting the security context in the first record and the security context in the fourth record to be invalid.

10. The method according to any one of claims 6 to 9, wherein the storing a security context of the first access and a security context of the second access comprises:
storing the second security context in the second record, and storing the third security context in the third record, wherein the second PLMN is a PLMN with which the second access is registered and is successfully registered last time before the second access enters the deregistered state.

11. The method according to any one of claims 6 to 9, wherein the storing a security context of the first access and a security context of the second access comprises:
when last registration of the second access before the second access enters the deregistered state fails, and a security context in which the second access is most recently successfully registered exists, storing the second security context in the second record, and storing the third security context in the third record based on the security context in which the second access is most recently successfully registered, wherein the second PLMN is a PLMN with which the second access is most recently successfully registered.

12. The method according to any one of claims 6 to 9, wherein the storing a security context of the first access and a security context of the second access comprises:
when last registration of the second access before the second access enters the deregistered state fails, and a security context in which the second access is most recently successfully registered does not exist, setting the security context in the second record and the security context in the third record to be invalid.

13. The method according to claim 6, wherein the storing a security context of the first access and a security context of the second access comprises:
when last registration of the first access before the first access enters the deregistered state fails, and a security context in which the first access is most recently successfully registered does not exist, and when last registration of the second access before the second access enters the deregistered state fails, and a security context in which the second access is most recently successfully registered does not exist, keeping information in the first record, the second record, the third record, and the fourth record unchanged.

14. The method according to claim 6, wherein the first PLMN is the same as the second PLMN, and the storing a security context of the first access and a security context of the second access comprises:
storing the first security context in the first record, storing the third security context in the third record, and setting the security context in the second record and the security context in the fourth record to be invalid, wherein the first PLMN is a PLMN with which the first access is registered and is successfully registered last time before the first access enters the deregistered state, and the second PLMN is a PLMN with which the second access is registered and is successfully registered last time before the second access enters the deregistered state.

15. The method according to any one of claims 3 to 14, wherein when the first access leaves the deregistered state, and the second access is in the deregistered state, the terminal reads the security context of the first access and the security context of the second access from the storage unit, and identifies the security context of the first access and the security context of the second access stored in the storage unit as invalid.

16. A security context update method, performed by a terminal, and comprising:
when first access of the terminal enters a deregistered state, storing a security context of the first access; and
when second access of the terminal enters a deregistered state, storing a security context of the second access, wherein
the first access is that the terminal accesses a network by using a 3rd generation partnership project 3GPP access network, and the second access is that the terminal accesses a network by using a non-3GPP access network; or the first access is that the terminal accesses a network by using a non-3GPP access network, and the second access is that the terminal accesses a network by using a 3GPP access network.

17. The method according to claim 16, further comprising:
when the first access is in the deregistered state, and a current security context of the second access changes, storing the security context of the first access based on the current security context of the second access.

18. The method according to claim 17, further comprising:
when the current security context of the second access changes, and the second access enters the deregistered state again, storing the security context of the second access based on the current security context of the second access.

19. The method according to claim 17 or 18, wherein that the current security context of the second access changes comprises generation, update, or deletion of the current security context of the second access.

20. The method according to claim 19, wherein the update does not comprise update of a non-access stratum NAS uplink/downlink count.

21. The method according to any one of claims 16 to 20, wherein the deregistered state comprises power-off.

22. The method according to any one of claims 16 to 21, wherein the storing a security context of the first access comprises:
storing the security context of the first access in a storage unit;
the storing a security context of the second access comprises: storing the security context of the second access in the storage unit; and
the storage unit is a universal subscriber identity module USIM or a non-volatile memory.

23. The method according to any one of claims 16 to 22, wherein a first file of the terminal is used to store the security context of the first access, a second file of the terminal is used to store the security context of the second access, the first file comprises a first record and a second record, and the second file comprises a third record and a fourth record.

24. The method according to claim 23, wherein a first security context in the first record corresponds to a first public land mobile network PLMN, a fourth security context in the fourth record corresponds to the first PLMN, and the first access has been registered with the first PLMN.

25. The method according to claim 24, wherein a second security context in the second record corresponds to a second PLMN, a third security context in the third record corresponds to the second PLMN, and the second access has been registered with the second PLMN.

26. The method according to claim 25, wherein when the first access enters the deregistered state, the storing a security context of the first access comprises:
when last registration of the first access before the first access enters the deregistered state fails, and a security context in which the first access is most recently successfully registered does not exist, setting the security context in the first record to be invalid, and storing the second security context in the second record, wherein the second PLMN is a PLMN currently accessed by the second access.

27. The method according to claim 25, wherein when the first access enters the deregistered state, the storing a security context of the first access comprises:
when last registration of the first access before the first access enters the deregistered state fails, and a security context in which the first access is most recently successfully registered still exists, storing the first security context in the first record, and storing the second security context in the second record based on the security context in which the first access is most recently successfully registered, wherein the first PLMN is a PLMN with which the first access is most recently successfully registered, and the second PLMN is a PLMN currently accessed by the second access.

28. The method according to claim 25, wherein when the first access enters the deregistered state, the storing a security context of the first access comprises:
storing the first security context in the first record, and storing the second security context in the second record, wherein the first PLMN is a PLMN with which the first access is registered and is successfully registered last time before the first access enters the deregistered state, and the second PLMN is a PLMN currently accessed by the second access.

29. The method according to any one of claims 25 to 28, wherein when the first access is in the deregistered state, and the current security context of the second access changes, the storing the security context of the first access based on the current security context of the second access comprises:
when the first access is in the deregistered state, and the current security context of the second access changes, storing the first security context in the first record, and storing a fifth security context in the second record, wherein the fifth security context corresponds to the current security context of the second access.

30. The method according to claim 29, wherein when the current security context of the second access changes, and the second access enters the deregistered state again, the storing the security context of the second access based on the current security context of the second access comprises:
when the current security context of the second access changes, and the second access enters the deregistered state again, storing a sixth security context in the third record, wherein the sixth security context corresponds to the current security context of the second access; and storing the fourth security context in the fourth record.

31. The method according to claim 25, wherein the first PLMN is the same as the second PLMN, and when the first access enters the deregistered state, the storing a security context of the first access comprises:
storing the security context of the first access of the first PLMN in the first record, and setting the security context in the second record to be invalid, wherein the first PLMN is a PLMN with which the first access is registered and is successfully registered last time before the first access enters the deregistered state, and the second PLMN is a PLMN currently accessed by the second access.

32. The method according to claim 31, wherein when the current security context of the second access changes, and the first access is in the deregistered state, the storing the security context of the first access comprises:
storing the first security context in the first record, and setting the security context in the second record to be invalid.

33. The method according to any one of claims 22 to 31, wherein when the first access leaves the deregistered state, the terminal reads the security context of the first access from the storage unit, and identifies the security context of the first access stored in the storage unit as invalid.

34. The method according to any one of claims 1 to 33, wherein the method further comprises:
determining, based on a last visited registered tracking area identity LVR TAI of third access, whether the third access is successfully registered with a third PLMN, wherein the third access is the first access or the second access, and the third PLMN corresponds to the LVR TAI.

35. The method according to any one of claims 1 to 34, wherein the terminal determines whether an identifier of a PLMN on which the first access camps is the same as an identifier of a PLMN comprised in the second record; and if the identifier of the PLMN on which the first access camps is the same as the identifier of the PLMN comprised in the second record, before sending a first registration request to the camped PLMN, the terminal sets the security context in the second record to a current security context of the first access, wherein the first registration request comprises a terminal identifier of the second access and/or an LVR TAI of the second access; or if the identifier of the PLMN on which the first access camps is different from the identifier of the PLMN comprised in the second record, before sending a second registration request to the camped PLMN, the terminal sets the security context in the first record to the current security context of the first access, wherein the second registration request comprises a terminal identifier of the first access and an LVR TAI of the first access.

36. The method according to any one of claims 1 to 34, wherein the terminal determines whether an identifier of a PLMN on which the first access camps is the same as an identifier of a PLMN comprised in the first record; if the identifier of the PLMN on which the first access camps is the same as the identifier of the PLMN comprised in the first record, before sending a third registration request to the camped PLMN, the terminal sets the security context in the first record to a current security context of the first access, wherein the third registration request comprises a terminal identifier of the first access and an LVR TAI of the first access; or if the identifier of the PLMN on which the first access camps is different from the identifier of the PLMN comprised in the first record, the terminal determines whether the identifier of the PLMN on which the first access camps is the same as an identifier of a PLMN comprised in the second record; and if the identifier of the PLMN on which the first access camps is the same as the identifier of the PLMN comprised in the second record, before sending a fourth registration request to the camped PLMN, the terminal sets the security context in the second record to the current security context of the first access, wherein the fourth registration request comprises a terminal identifier of the second access and/or an LVR TAI of the second access; or if the identifier of the PLMN on which the first access camps is different from the identifier of the PLMN comprised in the second record, before sending a fifth registration request to the camped PLMN, the terminal sets the security context in the first record to the current security context of the first access, wherein the fifth registration request comprises the terminal identifier of the first access and the LVR TAI of the first access.

37. A communication apparatus, comprising a unit configured to implement the method according to any one of claims 1 to 36.

38. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 36.

39. A computer-readable storage medium, wherein the computer-readable storage medium stores computer instructions, and when the computer instructions are run on a computer, the method according to any one of claims 1 to 36 is performed.

40. A computer program product, wherein the computer program product comprises computer program code, and when the computer program code is run on a computer, the method according to any one of claims 1 to 36 is performed.
